**Europäisches Patentamt**

**European Patent Office**

**Office européen des brevets**

(11) Numéro de publication: **0 088 692**
**B1**

(12) **FASCICULE DE BREVET EUROPEEN**

(45) Date de publication du fascicule du brevet: **20.11.86**

(21) Numéro de dépôt: **83400456.6**

(22) Date de dépôt: **04.03.83**

(51) Int. Cl.⁴: **B 05 B 9/06, A 01 M 7/00**

(54) **Dispositif de régulation du débit d'un fluide à pulvériser par un pulvérisateur mobile.**

(30) Priorité: **05.03.82 FR 8203780**

(43) Date de publication de la demande:
**14.09.83 Bulletin 83/37**

(45) Mention de la délivrance du brevet:
**20.11.86 Bulletin 86/47**

(84) Etats contractants désignés:
**AT BE CH DE GB IT LI LU NL SE**

(56) Documents cités:
**AU-A- 41 130**
**FR-A-2 185 940**
**FR-A-2 272 746**
**FR-A-2 432 266**

(73) Titulaire: **ACM CARUELLE S.A.**
**Rue de l'Industrie B.P. 2**
**F-45550 Saint Denis de l'Hotel (FR)**

(72) Inventeur: **Rateau, André**
**378 rue des déportés**
**F-45400 Fleury les Aubrais (FR)**

(74) Mandataire: **Phélip, Bruno et al**
**c/o Cabinet Harlé & Phélip 21, rue de la**
**Rochefoucauld**
**F-75009 Paris (FR)**

Courier Press, Leamington Spa, England.

## Description

La présente invention concerne un dispositif de régulation du débit d'un fluide à pulvériser par un pulvérisateur mobile, et, en particulier, un dispositif de régulation du débit d'un fluide envoyé à une rampe de pulvérisation en fonction de la vitesse d'avancement du pulvérisateur.

Dans les dispositifs connus, on a d'abord utilisé des vannes à commande manuelle pour la régulation du débit du fluide à pulvériser. Mais de tels systèmes ne permettent pas de régler correctement et assez vite le débit à contrôler en fonction de la vitesse du véhicule portant le pulvérisateur, et ils nécessitent une main d'oeuvre supplémentaire coûteuse. On connaît également un dispositif de régulation du débit d'un fluide à pulvériser par un pulvérisateur mobile équipé d'une rampe de pulvérisation, et qui comprend une cuve d'alimentation, contenant le fluide à pulvériser, et reliée à la rampe par une pompe d'alimentation et une première chambre de moyens de régulation du débit en fonction de la vitesse de déplacement du pulvérisateur, qui comprennent également une seconde chambre reliée à la première chambre par un premier clapet et présentant un orifice de sortie du fluide à pulvériser, un circuit électronique sensible à la vitesse de déplacement du pulvérisateur, un circuit d'assistance hydraulique comprenant un réservoir d'un fluide hydraulique d'assistance, une pompe d'assistance reliée au réservoir, une troisième chambre présentant un orifice d'entrée par lequel elle est alimentée en fluide d'assistance par la pompe d'assistance, un piston soumis à la pression du fluide d'assistance dans la troisième chambre et solidaire du premier clapet, et une quatrième chambre présentant un orifice de sortie par lequel elle est reliée au réservoir, et communiquant avec la troisième chambre par des moyens de réglage du passage du fluide d'assistance.

Dans un dispositif de ce type, connu par le document FR—A—2 185 940, le piston et la troisième chambre forment un vérin, alimenté en fluide d'assistance, tel qu'une huile hydraulique, par la pompe d'assistance qui est entraînée par le circuit électronique agencé en variateur ou multiplicateur de vitesse relié à une roue du véhicule porteur de la rampe de pulvérisation, et les moyens de régalge du passage du fluide d'assistance de la troisième à la quatrième chambre comprennent une aiguille qui est plus ou moins engagée dans un orifice calibré, ménagé dal.s une paroi mince de séparation entre les deux chambres, par un réglage manuel correspondant au débit désiré. Ce dispositif permet de moduler la commande du débit en fonction de la vitesse du véhicule porteur par un système de régulation mécanique associée à une commande manuelle de réglage du débit.

Un objet de la présente invention est un dispositif de régulation automatique de débit d'un fluide à pulvériser en fonction de la vitesse du véhicule porteur du pulvérisateur.

L'invention permet ainsi d'obtenir le débit approprié par surface donnée quelles que soient les variations de vitesse du véhicule portant le pulvérisateur. Elle répond spécialement aux besoins des traitement agricoles au moyen d'engrais, de pesticides ou autres substances (liquides ou gazeuses), et ne nécessite pas de main d'oeuvre supplémentaire pour obtenir à tous moments le débit voulu en fonction de la vitesse du véhicule. Selon la présente invention, un dispositif de régulation du débit d'un fluide à pulvériser par un pulvérisateur mobile équipé d'une rampe de pulvérisation, et du type présenté ci-dessus, se caractérise en ce que le réservoir et la pompe d'assistance sont respectivement constitués par la cuve et la pompe d'alimentation, le fluide hydraulique d'assistance étant le fluide à pulvériser, qui est transmis à la rampe de pulvérisation par un orifice de sortie de la première chambre, tandis que les orifices de sortie de la seconde et de la quatrième chambre forment respectivement un orifice de retour principal et un orifice de retour secondaire du fluide à pulvériser à la cuve, les moyens de réglage du débit de passage de la troisième à la quatrième chambre comprenant un second clapet manoeuvré par un électro-aimant commandé par un signal de sortie du circuit électronique, afin d'ajuster la pression du fluide s'exerçant sur le piston solidaire du premier clapet, pour que ce dernier régule le débit d'alimentation de la rampe.

Dans une forme avantageuse de réalisation, l'électro-aimant agit sur le second clapet en réponse à un signal de sortie du circuit électronique qui est proportionnel au carré de la vitesse de déplacement du pulvérisateur, de sorte que le premier clapet soumette le fluide à pulvériser contenu dans la première chambre à une pression proportionnelle au carré de ladite vitesse de déplacement.

De plus, le premier clapet est monté dans la seconde chambre en clapet régulant le débit de retour en cuve du fluide à pulvériser passant par l'orifice de retour principal, tandis que le second clapet est monté dans la quatrième chambre en clapet régulant le débit de retour en cuve du fluide à pulvériser passant par l'orifice de retour secondaire, et que le piston solidaire du premier clapet est monté coulissant dans un passage reliant la seconde à la troisième chambre.

Un mode de réalisation de la présente invention sera mis en évidence dans la description suivante, donnée à titre d'exemple non limitatif, en référence aux dessins annexés dans lesquels:

Fig. 1 est un schéma de principe d'un dispositif de régulation de débit;

Fig. 2 est un schéma d'un dispositif de régulation de débit selon l'invention; et

Figure 3 est un schéma de détail du circuit électronique des dispositifs de régulation de débit des figures 1 et 2.

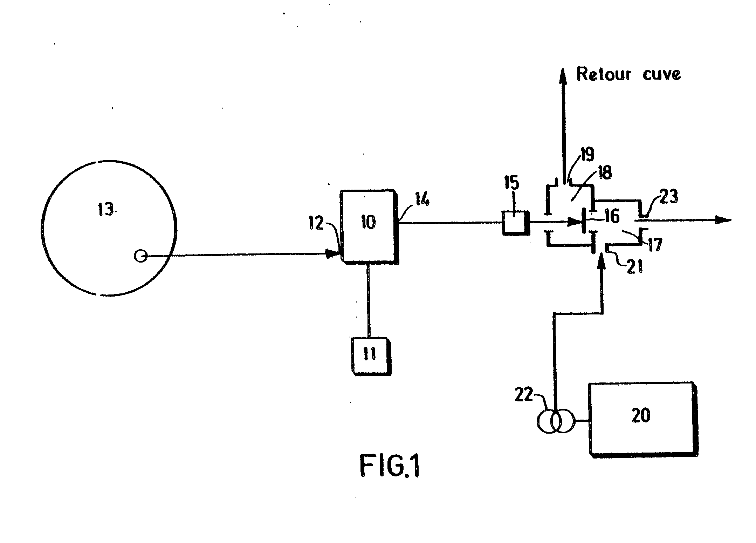

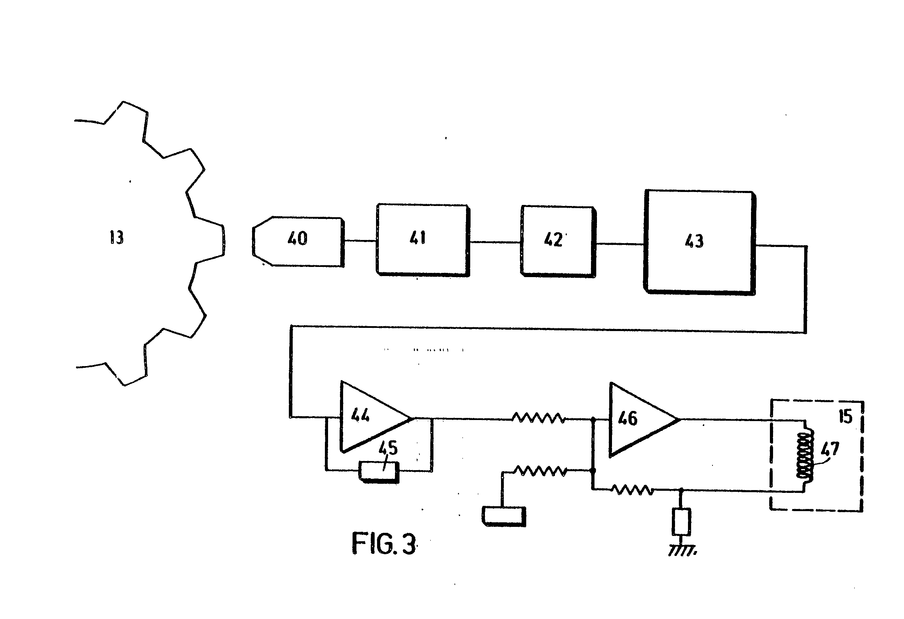

Le dispositif de régulation de débit, représenté schématiquement sur la figure 1, comprend un circuit électronique 10 alimenté par une source d'alimentation telle qu'une batterie électrique 11 et sensible à la vitesse du véhicule portant le pulvérisateur et son dispositif de régulation de débit. Par un moyen tel que représenté sur la figure 3, on détecte directement la vitesse du véhicule pour engendrer un signal électrique proportionnel à cette vitesse V qui est envoyé au circuit électronique 10. Dans l'exemple illustré, le circuit 10 est relié par une entrée 12 à l'une des roues 13. Le circuit électronique 10 est conçu pour traiter ce signal et engendrer un signal proportionnel au carré de la vitesse V à une sortie 14 qui est reliée à un électro-aimant 15. Sous l'effet de ce signal, l'électro-aimant agit sur un clapet 16 servant au passage d'un fluide d'une chambre 17 dans une chambre 18 qui comporte un orifice 19 de retour du fluide vers une cuve 20. La chambre 17 comporte un orifice d'entrée 21 pour l'admission du fluide de pulvérisation contenu dans la cuve au moyen d'une pompe 22 entraînée par sa connexion à une prise de force. La chambre 17 comporte aussi un orifice de sortie 23 par lequel le fluide admis est dirigé vers la rampe de pulvérisation, non représentée, du pulvérisateur.

Le principe de fonctionnement du dispositif de régulation de débit de la figure 1 est le suivant. La vitesse réelle du véhicule V étant détectée, par exemple à partir de la roue 13, un signal électrique est envoyé à l'entrée 12 du circuit électronique 10 qui engendre à sa sortie 14 un courant proportionnel au carré de la vitesse V détectée. Ce courant appliqué à l'électro-aimant 15 permet à celui-ci d'exercer une pression suivant la loi de proportionnalité $kV^2$ sur la section du clapet 16. Le fluide admis dans la chambre 17, par l'orifice d'entrée 21 relié à la pompe 22 est ainsi soumis à une pression qui est proportionnelle au carré de la vitesse du véhicule par l'action de l'électro-aimant 15 sur le clapet 16. Le clapet 16 permet donc sous l'action de l'électro-aimant 15 de moduler le débit de pulvérisation du fluide envoyé à la rampe proportionnellement au carré de la vitesse réelle du véhicule. Le clapet 16 permet aussi de laisser un passage entre la chambre 17 et la chambre 18 correspondant à la pression à laquelle il est soumis pour un retour dans la cuve 20 de l'excédent du fluide (par rapport au débit voulu) qui se trouve dans la chambre 17. Le dispositif de régulation de débit de la figure 1 fournit ainsi un système de régulation automatique du débit du fluide de pulvérisation en fonction de la vitesse du véhicule.

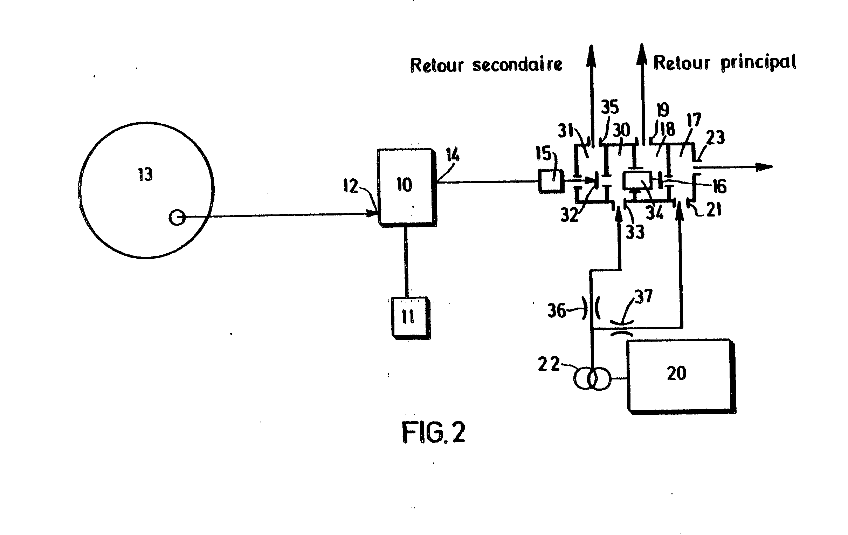

La figure 2 représente un exemple de réalisation du dispositif de régulation de débit selon l'invention. On a vu que le dispositif de régulation de débit de la figure 1 comportait des moyens de régulation de débit constitués par l'électro-aimant 15 agissant proportionnellement au carré de la vitesse V sur le clapet 16. Les moyens de régulation de débit du dispositif de la figure 2 comprennent en outre des moyens d'assistance hydraulique comportant deux chambres 30 et 31, un clapet 32 pour le passage du fluide de la chambre 30 dans la chambre 31 et un piston 34 solidaire du clapet 16 des figures 1 et 2. La chambre 30 comporte un orifice d'entrée 33 relié à la pompe 22 pour recevoir du fluide provenant de la cuve 20. La chambre 31 comporte un orifice de retour secondaire 35 pour le retour dans la cuve 20 du fluide que le clapet 32 laisse passer de la chambre 30 dans la chambre 31. Dans l'exemple de réalisation représenté sur la figure 2, l'électro-aimant 15 agit toujours sur le clapet 16 mais de façon indirecte. Sous l'action du courant proportionnel au carré de la vitesse V, l'électro-aimant 15 exerce une pression suivant la loi $kV^2$ sur la section du clapet 32. Cette pression est transmise au piston 34 par le fluide se trouvant dans la chambre 30 et le piston 34 exerce à son tour sur le clapet 16 une force qui est proportionnelle au carré de la vitesse du véhicule V. De cette façon, le fluide envoyé par la pompe 22 dans la chambre 17 est soumis par le clapet 16 à une pression de pulvérisation, modulée proportionnellement au carré de la vitesse réelle du véhicule. Par un ajustage approprié des sections des clapets 32 et 16 et du piston 34 on peut fixer la valeur de la constante de l'expression $kV^2$ de la pression exercée par le clapet 16 sur le fluide dans la chambre 17 de manière à obtenir la valeur désirée du débit du fluide pulvérisé par la rampe pour une vitesse donnée du véhicule. Pour réduire l'effort que doit exercer l'électro-aimant 15 sur le clapet 32 pour obtenir la pression voulue dans la chambre 17, on a prévu dans le système d'assistance hydraulique du dispositif de la figure 2 une alimentation en fluide de la chambre 30 par la pompe 22. Le fluide ainsi admis dans la chambre 30 par l'orifice d'entrée 33 exerce une pression sur la section du piston 34 et crée un effort plus important que l'action de l'électro-aimant 15 sur le clapet 32. On peut ainsi réduire de façon appréciable l'énergie que doit fournir l'électro-aimant 15 pour obtenir la pression voulue dans la chambre 17, c'est-à-dire choisir un circuit électronique 10, un électro-aimant 15 et un clapet 32 moins importants qui diminuent d'autant le coût du dispositif. Dans l'exemple de réalisation de l'invention représenté sur la Figure 2, les moyens d'assistance hydraulique comprennent en outre deux diaphragmes 36 et 37 placés sur le trajet du fluide envoyé de la pompe 22 respectivement aux orifices d'entrée 33 et 21. Le diaphragme 37 placé sur le trajet principal du fluide envoyé dans la chambre 17 pour être pulvérisé a une section supérieure à celle du diaphragme 36 placé sur le trajet secondaire du fluide envoyé dans la chambre 30 pour agir sur le piston 34. Dans un exemple de réalisation préféré de l'invention, le diaphragme 37 a une section de diamètre 15 mm et le diaphragme 36 une section de diamètre 1,5 mm. On peut ainsi amener par exemple de l'eau sous une pression de 5 bars dans la chambre 30 quand la pression est nulle au niveau du distributeur de la rampe.

La Figure 3 représente un exemple de réalisation préféré du circuit électronique 10 des dispositifs des Figures 1 et 2, mais il faut noter qu'il peut être réalisé différemment dans la mesure où le signal engendré à sa sortie 14 est proportionnel au carré de la vitesse V du véhicule. Sur la Figure 3, un détecteur 40 permet de détecter la vitesse V du véhicule. Ce détecteur 40 est par exemple un capteur de proximité ou un radar lisant directement la vitesse de défilement du sol sous le véhicule par effet Doppler. Le circuit électronique 10 relié au détecteur 40 comprend, sur la Figure 3, un circuit 41 de mise en forme du signal transmis par le détecteur 40 qui est proportionnel à la vitesse du véhicule. Le signal mis en forme F=f(V) est transformé en un signal U=f(V) dans un circuit 42. Ce signal est ensuite amplifié dans un circuit 43 suivant un gain variable d'environ×2 pour donner un nouveau signal proportionnel à la vitesse V, U=f(V). Ce signal est envoyé à un circuit d'adaptation de signal comprenant un amplificateur 44 et une impédance d'adaptation 45 en parallèle. Le signal en sortie de l'amplificateur 44 est ensuite envoyé à un circuit d'amplification de courant comprenant un amplificateur 46 et un circuit de réaction dans lequel est incluse la bobine 47 de l'électro-aimant 15. On obtient ainsi un courant dans la bobine d'induction proportionnel au carré de la vitesse V du véhicule, $I=Io+kU$ ($fV^2$). La pression exercée par l'électro-aimant, soit directement sur le clapet 16 du dispositif de la Figure 1, soit sur le clapet 32 du dispositif de la Figure 2, est donc proportionnelle au carré de la vitesse V du véhicule comme le courant qui l'alimente en provenance du circuit électronique 10.

L'invention n'est pas limitée par l'exemple de réalisation qui a été décrit. On peut en effet lui apporter des variantes, dès lors qu'on utilise un électro-aimant alimenté par un courant proportionnel au carré de la vitesse réelle V du véhicule engendré par un circuit électronique approprié et que l'on fait agir cet électro-aimant sur un clapet, directement ou indirectement, pour moduler la pression du fluide de pulvérisation proportionnellement au carré de la vitesse du véhicule.

**Revendications**

1. Dispositif de régulation du débit d'un fluide à pulvériser par un pulvérisateur mobile équipé d'une rampe de pulvérisation, le dispositif comprenant une cuve d'alimentation (20) contenant le fluide à pulvériser, et reliée à la rampe par une pompe d'alimentation (22) et, une première chambre (17) de moyens de régulation du débit en fonction de la vitesse de déplacement du pulvérisateur, qui comprennent également une seconde chambre (18), reliée à la première chambre (17) par un premier clapet (16) et présentant un orifice de sortie (19) du fluide à pulvériser, un circuit électronique (10) sensible à la vitesse de déplacement du pulvérisateur, un circuit d'assistance hydraulique comprenant un réservoir d'un fluide hydraulique d'assistance, une pompe d'assistance reliée au réservoir, une troisième chambre (30) présentant un orifice d'entrée (33) par lequel elle est alimentée en fluide d'assistance par la pompe d'assistance, un piston (34) soumis à la pression du fluide d'assistance dans la troisième chambre (30) et solidaire du premier clapet, et une quatrième chambre (31) présentant un orifice de sortie (35) par lequel elle est reliée au réservoir, et communiquant avec la troisième chambre (30) par des moyens (32) de réglage du passage du fluide d'assistance, caractérisé en ce que le réservoir et la pompe d'assistance sont respectivement constitués par la cuve (20) et la pompe d'alimentation (22), le fluide hydraulique d'assistance étant le fluide à pulvériser, qui est transmis à la rampe de pulvérisation par un orifice de sortie (23) de la première chambre (17) tandis que les orifices de sortie (19, 35) de la seconde et de la quatrième chambres (18, 31) forment respectivement un orifice de retour principal et un orifice de retour secondaire du fluide à pulvériser à la cuve (20), les moyens de réglage du débit de passage de la troisième (30) à la quatrième chambre (31) comprenant un second clapet (32) manoeuvré par un électro-aimant (15) commandé par un signal de sortie du circuit électronique (10) afin d'ajuster la pression du fluide s'exerçant sur le piston (34) solidaire du premier clapet (16) pour que ce dernier régule le débit d'alimentation de la rampe de pulvérisation.

2. Dispositif de régulation selon la revendication 1, caractérisé en ce que l'électro-aimant (15) agit sur le second clapet (32) en réponse à un signal de sortie du circuit électronique (10) qui est proportionnel au carré de la vitesse de déplacement du pulvérisateur, de sorte que le premier clapet (16) soumette le fluide à pulvériser contenu dans la première chambre (17) à une pression proportionnelle au carré de ladite vitesse de déplacement.

3. Dispositif de régulation selon l'une des revendications 1 et 2, caractérisé en ce que le premier clapet (16) est monté dans la seconde chambre (18) en clapet régulant le débit de retour en cuve (20) du fluide à pulvériser passant par l'orifice de retour principal (19).

4. Dispositif de régulation selon l'une des revendications 1 à 3, caractérisé en ce que le second clapet (32) est monté dans la quatrième chambre (31) en clapet régulant le débit de retour en cuve (20) du fluide à pulvériser passant par l'orifice de retour secondaire (35).

5. Dispositif de régulation selon l'une des revendications 1 à 4, caractérisé en ce que le piston (34) solidaire du premier clapet (16) est monté coulissant dans un passage reliant la seconde à la troisième chambre (18, 30).

6. Dispositif de régulation selon l'une des revendications 1 à 5, caractérisé en ce que les première et troisième chambres (17, 30) sont réliées en parallèle à la pompe (22) respectivement par un premier et un second diaphragme (37, 36), la section du premier diaphragme (37) étant supérieure à celle du second diaphragme (36).

7. Dispositif de régulation selon la revendication 6, caractérisé en ce que le rapport des diamètres de section des premier et second diaphragmes (37, 36) est égal à 10.

**Patentansprüche**

1. Vorrichtung zur Abgaberegelung eines zu zerstäubenden Fluids von einem mobilen Zerstäuber, der mit einer Zerstäubungsbühne versehen ist, wobei die Vorrichtung einen Versorgungsbehälter (20) mit dem zu zerstäubenden Fluid umfaßt, der über eine Speisepumpe (22) an die Bühne angeschlossen ist, eine erste Kammer (17) einer Abgaberegelungseinrichtung in Abhängigkeit von der Geschwindigkeit der Ortsveränderung des Zerstäubers umfaßt, die auch eine zweite Kammer (18) hat, welche mit der ersten Kammer (17) über ein erstes Ventil (16) in Verbindung steht und eine Ausgangsöffnung (19) für das zu zerstäubende Fluid aufweist, einen elektronischen Schaltkreis (10) umfaßt, der auf die Geschwindigkeit der Ortsveränderung des Zerstäubers anspricht, einen hydraulischen Servokreis umfaßt, welcher einen Speicher hydraulischer Servoflüssigkeit, eine an den Speicher angeschlossene Servopumpe, eine dritte Kammer (30), welche eine Eingangsöffnung (33) aufweist, durch welche die Servoflüssigkeit mittels der Servopumpe eingespeist wird, einen Kolben (34), welcher unter dem Druck der Servoflüssigkeit in der dritten Kammer (30) steht und mit dem ersten Ventil verbunden ist, sowie eine vierte Kammer (31) einschließt, welche eine Ausgangsöffnung (35) aufweist, über die sie an den Speicher angeschlossen ist und mit der dritten Kammer (30) über einen Regler (32) des Durchgangs des Servofluids in Verbindung steht, dadurch gekennzeichnet, daß der Speicher und die Servopumpe durch den Versorgungsbehälter (20) beziehungsweise die Speisepumpe (22) gebildet sind, daß das hydraulische Servofluid das zu zerstäubende Fluid darstellt, welches zu der Zerstäubungsbühne über eine Ausgangsöffnung (23) der ersten Kammer (17) geleitet wird, während die Ausgangsöffnungen (19, 35) der zweiten und der vierten Kammer eine Hauptrücklauföffnung beziehungsweise eine Hilfsrücklauföffnung des zu zerstäubenden Fluid zu dessen Versorgungsbehälter (20) bilden, daß die Abgaberegelungseinrichtung des Durchgangs der dritten Kammer (30) zu der vierten Kammer (31) ein zweites Ventil (32) umfaßt, welches durch einen von einem Ausgangssignal des elektronischen Schaltkreises (10) steuerbaren Elektromagneten (15) betätigbar ist, um den auf den Kolben (34), der mit dem ersten Ventil (16) verbunden ist, einwirkenden Fluiddruck einzustellen, damit letzteres die Einspeisungsmenge der Zerstäubungsbühne regelt.

2. Regelungsvorrichtung nach Anspruch 1, dadurch gekennzeichnet, daß der Elektromagnet (15) auf das zweite Ventil (32) infolge eines Ausgangssignals des elektronischen Schaltkreises (10) einwirkt, welches dem Quadrat der Geschwindigkeit der Ortsveränderung des Zerstäubers proportional ist, so daß das erste Ventil (16) das in der ersten Kammer (17) enthaltene Fluid einem Druck aussetzt, welcher dem Quadrat der Geschwindigkeit der Ortsveränderung proportional ist.

3. Regelungsvorrichtung nach einem der Ansprüche 1 und 2, dadurch gekennzeichnet, daß das erste Ventil (16) in der zweiten Kammer (18) dergestalt angeordnet ist, daß das Ventil die Rücklaufmenge des Fluids in den Versorgungsbehälter (20) des zu zerstäubenden Fluids regelt, die durch die Hauptrücklauföffnung (19) strömt.

4. Regelungsvorrichtung nach einem der Ansprüche 1—3, dadurch gekennzeichnet, daß das zweite Ventil (32) in der vierten Kammer (31) dergestalt angeordnet ist, daß das Ventil die Rücklaufmenge des Fluids in den Versorgungsbehälter (20) des zu zerstäubenden Fluids regelt, die durch die Hilfsrücklauföffnung (35) strömt.

5. Regelungsvorrichtung nach einem der Ansprüche 1—4, dadurch gekennzeichnet, daß der mit dem ersten Ventil (16) verbunden Kolben (34) in einem Durchgang verschiebbar angeordnet ist, welcher die zweite mit der dritten Kammer (18, 30) verbindet.

6. Regelungsvorrichtung nach einem der Ansprüche 1—5, dadurch gekennzeichnet, daß die erste Kammer (17) und die dritte Kammer (30) parallel zueinander an die Pumpe (22) über ein erstes beziehungsweise zweites Diaphragma (37 bzw. 36) angeschlossen sind und daß der Querschnitt des ersten Diaphragma (37) denjenigen des zweiten Diaphragmas (36) übertrifft.

7. Regelungsvorrichtung nach Anspruch 6, dadurch gekennzeichnet, daß das Durchmesserverhältnis des ersten zu dem zweiten Diaphragma (37 bzw. 36) gleich 10 ist.

**Claims**

1. Device for controlling the flow of a liquid to be sprayed by a mobile sprayer equipped with a spraying manifold, the device comprising a feed vessel (20) containing the liquid to be sprayed, and connected to the manifold by a feed pump (22) and a first chamber (17) of the means for controlling the flow as a function of the speed of travel of the sprayer, which also comprises a second chamber (18), connected to the first chamber (17) via a first valve (16) and having an outlet orifice (19) for the liquid to be sprayed, an electronic circuit (10) sensitive to the speed of travel of the sprayer, a hydraulic servo circuit comprising a storage tank of a hydraulic servo fluid, a servo pump connected to the storage tank, a third chamber (30) having an inlet orifice (33) through which it is fed with servo fluid by the servo pump, a plunger (34) subjected to the pressure of the servo fluid in the third chamber (30) and integral with the first valve, and a fourth chamber (31) having an outlet orifice (35) through which it is connected to the storage tank, and in communication with the third chamber (30) via means (32) for controlling the flow of the servo fluid, characterised in that the storage tank and the servo pump consist, respectively, of the vessel (20) and the feed pump (22), the hydraulic servo fluid being the liquid to be sprayed, which is conveyed to the spraying manifold via an outlet orifice (23) of the first chamber (17), while the outlet orifices (19, 35) of the second and of the fourth chambers (18, 31) form, respectively, a principal return orifice and a secondary return orifice for the liquid to be sprayed to the vessel (20), the means for controlling the rate of flow from the third (30) to the fourth chamber (31) comprising a second valve (32) operated by an electromagnet (15) controlled by an output signal of the electronic circuit (10) in order to adjust the pressure of the fluid which is exerted on the plunger (34) which is integral with the first valve (16) so that the latter controls the feed flow to the spraying manifold.

2. Control device according to Claim 1, characterized in that the electromagnet (15) actuates the second valve (32) in response to an output signal of the electronic circuit (10) which is proportional to the square of the speed of travel of the sprayer, so that the first valve (16) subjects the liquid to be sprayed, contained in the first chamber (17) to a pressure which is proportional to the square of the said speed of travel.

3. Control device according to either of Claims 1 and 2, characterized in that the first valve (16) is mounted in the second chamber (18) as a valve controlling the return flow to the vessel (20) of the liquid to be sprayed flowing through the principal return orifice (19).

4. Control device according to one of Claims 1 to 3, characterized in that the second valve (32) is mounted in the fourth chamber (31) as a valve controlling the return flow to the vessel (20) of the liquid to be sprayed flowing through the secondary return orifice (35).

5. Control device according to one of Claims 1 to 4, characterized in that the plunger (34) integral with the first valve (16) is mounted so that it slides in a passage connecting the second to the third chamber (18, 30).

6. Control device according to one of Claims 1 to 5, characterized in that the first and third chambers (17, 30) are connected to the pump (22) in parallel via a first and a second diaphragm (37, 36) respectively, the cross-section of the first diaphragm (37) being larger than that of the second diaphragm (36).

7. Control device according to Claim 6, characterised in that the ratio of the diameters of cross-section of the first and second diaphragms (37, 36) is equal to 10.

FIG.1

Retour secondaire    Retour principal

FIG. 2

0 088 692

FIG. 3

0 088 692